# EUROPEAN PATENT APPLICATION

(11) **EP 3 922 545 A1**
(43) Date of publication of application: **15.12.2021**
(21) Application number: 20178781.9
(22) Date of filing: 08.06.2020
(51) Int. Cl.: B63H 21/20, B60L 8/00, B60L 58/30, C02F 1/461, C25B 1/04, H01M 8/0606

(54) **SEA-BORNE VESSEL PRODUCING HYDROGEN ON-BOARD FROM RENEWABLE RESOURCES**

(71) Applicant: G.M.S. Global Maritime Services Ltd., London W1W 7LT (GB)
(72) Inventor: WESTGARD JANSSON, David, 47531 Öckerö (SE); SANDVIK, Rolf Andre, 0352 Oslo (NO); DOKKEN, Sverre, 3071 Limassol (CY); MICHAEL, Alexis, 3110 Limassol (CY); GRINDEVOLL, Jorgen, 1708040 Riosucio, Caldas (CO)
(74) Representative: Patentship Patentanwaltsgesellschaft mbH

(57) **Abstract**

The disclosure relates to a sea-borne vessel (100) for producing hydrogen on-board the sea-borne vessel (100) using energy from renewable resources (102), the sea-borne vessel (100) comprising: at least one renewable energy generator (104) configured to generate electrical energy (110) on-board the sea-borne vessel (100) based on renewable energy resources (102); at least one battery (103) configured to store the electrical energy (110) generated by the at least one renewable energy generator (104); an on-board hydrogen electrolysis generator (105) configured to produce hydrogen (111) based on water (108) pumped on-board the sea-borne vessel (100) and electrical energy (110) provided by the at least one energy source (211); a hydrogen storage tank (106) configured to store the produced hydrogen (111) on-board the sea-borne vessel (100); and a drive propulsion system (107) configured to drive the sea-borne vessel (100) based on hydrogen (111) from the hydrogen storage tank (106). Alternatively, it discloses also a method of converting hydrogen to electricity (506) that can be used to drive a sea-borne vessel (505).

## Description

### TECHNICAL FIELD

The disclosure relates to producing hydrogen on-board a vessel using renewable resources as a zero-emission energy solution in the shipping industry. In particular, the disclosure relates to a sea-borne vessel for producing hydrogen on-board the sea-borne vessel using energy from renewable resources such as solar or wind energy. The disclosure further relates to a method for production of hydrogen on board a sea-borne vessel using energy from renewable resources, or converting hydrogen back to electricity to drive a sea-borne vessel.

### BACKGROUND

Hydrogen is used as a low carbon fuel, particularly for heat, hydrogen vehicles, energy storage and long-distance transport of energy. The hydrogen economy is developing as a small part of the low-carbon economy. In order to phase out fossil fuels and limit global warming, hydrogen is starting to be used as its combustion only releases clean water, and no CO2 to the atmosphere.

Hydrogen has already become a solution for road transport, powering fuel cells in cars, buses and trucks. Work is under way to overcome some of the key challenges facing hydrogen as a fuel. Various projects and studies are conducted that are looking at ways to support the development of hydrogen as a transport fuel and resolve some of the safety, regulatory and technical issues. With the push for decarbonization, there is growing interest in hydrogen as an energy carrier, whether as a fuel for residential heating, as an industrial energy source or as a fuel for truck, rail and marine use.

More and more governments are interested in helping build a hydrogen supply infrastructure that will benefit road transport, industrial use, heating of homes and an integrated maritime supply chain. However, since hydrogen is highly flammable and challenging to contain due to the very small molecules, there are potential safety and regulatory challenges connected with its widespread use. Risk assessments are carried out to evaluate the risk levels of hydrogen transportation. The transfer technology for compressed hydrogen fuel has not yet been developed to a state where safe and fast bunkering can be ensured since the volumes needed for ships are greater than for a truck or bus. Hence, there is a need for technology that can ensure the use of hydrogen on ships at a high degree of safety.

### SUMMARY OF THE INVENTION

It is the object of the present disclosure to provide a concept for the use of hydrogen on ships at a high degree of safety.

The foregoing and other objects are achieved by the subject matter of the independent claims. Further implementation forms are apparent from the dependent claims, the description and the figures.

A main idea of this disclosure is to move the production of hydrogen on-board the ships. On-board production of hydrogen will revolutionize the use of hydrogen as a zero-emission energy solution in the shipping industry. This on-board production system will delete the need for very expensive and enormous infrastructure build up in form of production facilities far from the end user point. In addition, the need for expensive and secure distribution to end user points will be eradicated. To distribute electricity directly to end-user points on docks where ships with on-board production plants are docked, will be more secure, cost efficient and subject to less energy loss in the value chain.

On-board Hydrogen production enables construction of zero emission ships on which renewable energy sources can be used to cut emissions. Such zero emission ships provide a high degree of system integrations and are very cost efficient and safe.

Techniques according to this disclosure can be implemented particularly on small cruise ships but can be scaled up to be a functional solution for all deep-sea vessels in the future. These techniques enable the production of autonomous ships trading the world's oceans based on precise weather routing to maximize solar and wind conditions.

Beside renewable energy resources like solar and wind power, ships according to the disclosure may include shore power and as for an emergency solution a small generator may be installed to meet requirements from flag state and class for a "bring me home" back up.

Ships or vessels according to the disclosure may include solar power production. All surfaces suitable for high efficiency solar cells may be utilised to generate electricity. This can be windows/portholes superstructure of the ship where as much as possible can be captured from this source. The electricity can be used for energy storage in batteries and H2.

Ships or vessels according to the disclosure may include wind power production. The ships may be equipped with masts with wind turbines placed to capture as much wind as possible. This can be used to make electricity for storage in battery packs and H2.

Ships or vessels according to the disclosure may include shore power production. As more ports in the future will offer power connections from the pier when alongside. The ships may be run on itineraries that allows charging directly to battery banks on-board as the primary storage for energy on-board. When batteries are charged the system may continue to take on-board shore power to produce H2 to be stored in tanks either under high pressure or cooled down to liquid Hydrogen. This enables the vessel to store and utilize renewable energy for later use.

Ships or vessels according to the disclosure may include an overall control system. This overall control system can discriminate on how to use the renewable energy. The batteries may always be filled first. When batteries are topped up to maximum charging, the system may then continue to use the renewable energy to produce H2 to on-board tanks for storage and later use.

As energy may be used from the batteries and the load/discharge range on the batteries are optimal used to the recommended low rate, the renewable energy may again charge the batteries and may stop producing H2. In an event where the renewable energy is in excess of what maximum charging ratio to batteries, the system may allow production of H2 to continue in order to store the renewable energy as H2.

The system may also be integrated with an electrical diesel generator in order to secure safe navigation and operation of the ship. The propulsion system integration may include three different types of energy bearers. The system may allow the propulsion to be driven by all types of energy bearers available on-board, separately or in combination with each other pending on either manually selected on-board or in a computed hierarchy where the system itself finds the best economically way to operate. This may be incorporated with different voyage/weather/energy optimized systems.

In the following, a control system or simply called "system" for a vessel according to the disclosure is described. The system, also referred to as EPMS (Energy and Power Management System) or EMS (Energy Management System) is the overall control system of all energy storage, converter, producers and consumers. The EMS determines how the different subsystems interact and is also used as the Human Machine Interface (HMI). Each of these subsystems have their own control system built in and programmed from the manufacturer for safe use, efficiency, handling etc. Some examples of such subsystems are given below.

The battery management system (BMS) is delivered from battery manufacturer as part of the battery system, BMS, balances energy in the batteries, monitors temperatures, ampere, volt, SOC (state of charging) etc. and relays that information to the EMS.

The hydrogen production management system (HPMS) is delivered from Hydrogen production unit manufacturer. The HPMS monitors pressure, temperatures, efficiency etc. and relays that information to the EMS.

The hydrogen storage management system (HSMS) is delivered from Hydrogen storage unit manufacturer. The HSMS monitors pressure, tank level, temperatures etc. and relays that information to the EMS.

Further subsystems are for example:
Energy storage, such as batteries, H2 tanks, Diesel tanks;
Energy producers, such as solar, wind, heat conversion system (engine), shore connection;
Energy converter, such as fuel cells, H2 generator, auxiliary engine, e.g. conventional diesel engine with generator;
Energy consumers, such as propulsion motors, side thrusters, hotel load etc.

Moving H2 production on-board ships will revolutionize the use of H2 as a zero-emission energy solution in the shipping industry. This system as described in this disclosure will delete the need for very expensive and enormous infrastructure build up in form of production facilities far from the end user point. In addition, the need for expensive and secure distribution to end user points will be eradicated. To distribute electricity directly to end-user points on docks where ships with on-board production plants are docked, will be more secure, cost efficient and subject to less energy loss in the value chain.

The transition to a low to zero emission shipping industry based on solutions as presented in this disclosure will go faster and be less expensive for the society.

According to a first aspect the invention relates to a sea-borne vessel for producing hydrogen on-board the sea-borne vessel using energy from renewable resources, the sea-borne vessel comprising: at least one renewable energy generator configured to generate electrical energy on-board the sea-borne vessel based on renewable energy resources; at least one battery configured to store the electrical energy generated by the at least one renewable energy generator; an on-board hydrogen electrolysis generator configured to produce hydrogen based on water pumped on-board the sea-borne vessel and electrical energy provided by the at least one energy source 211; a hydrogen storage tank configured to store the produced hydrogen on-board the sea-borne vessel; and a drive propulsion system configured to drive the sea-borne vessel based on hydrogen from the hydrogen storage tank.

Due to on-board production of hydrogen, such a sea-borne vessel provides an efficient yield of hydrogen at a high degree of safety. The vessel is thus able to permanently travel through the sea without the need for docking at harbors beside for performing maintenance work.

Such a vessel with on-board production of hydrogen will revolutionize the use of hydrogen as a zero-emission energy solution in the shipping industry. This on-board production system will delete the need for very expensive and enormous infrastructure build up in form of production facilities far from the end user point. In addition, the need for expensive and secure distribution to end user points will be eradicated. To distribute electricity directly to end-user points on docks where ships with on-board production plants are docked, will be more secure, cost efficient and subject to less energy loss in the value chain.

In an exemplary implementation form of the sea-borne vessel, the sea-borne vessel comprises a fuel cell configured to convert the hydrogen from the hydrogen storage tank into electrical energy and to provide the electrical energy to the drive propulsion system for driving the sea-borne vessel.

This provides the advantage that the fuel cell allows for on-board hydrogen production which enables construction of zero emission ships on which renewable energy sources can be used to cut emissions. Such zero emission ships provide a high degree of system integrations and are very cost efficient and safe.

In an exemplary implementation form of the sea-borne vessel, the at least one battery can be charged by AC energy generated by the at least one renewable energy generator, in particular a wind turbine, or provided by a shore connection, and the at least one battery can be charged by DC energy generated by the at least one renewable energy generator, in particular a solar panel.

This provides the advantage that the vessel is able to consume any energy provided by the renewable energy generators, no matter if available as DC or as AC energy.

In an exemplary implementation form of the sea-borne vessel, the sea-borne vessel comprises an AC/DC converter configured to convert AC energy generated by the at least one renewable energy generator or provided by the shore connection into DC energy for charging the at least one battery.

This provides the advantage that the AC/DC converter allows to load the batteries with AC energy if only AC energy is available.

In an exemplary implementation form of the sea-borne vessel, the sea-borne vessel comprises a battery management system configured to control charging of the at least one battery, wherein the battery management system is configured to enable the on-board hydrogen generator to produce hydrogen based on a charging level of the at least one battery.

This provides the advantage that batteries have always a minimum amount of charging in order to produce hydrogen for the propulsion of the vessel.

In an exemplary implementation form of the sea-borne vessel, the battery management system is configured to disable the on-board hydrogen generator producing hydrogen until the at least one battery is charged to a predefined charging level.

This provides the advantage that the energy is intelligently consumed: First the batteries are charged and afterwards any other consumers can be served.

In an exemplary implementation form of the sea-borne vessel, the battery management system is configured to balance energy in the at least one battery and to monitor temperature, current, voltage and charging level of the at least one battery.

This provides the advantage that the battery can be intelligently controlled based on temperature, current, voltage and charging level.

In an exemplary implementation form of the sea-borne vessel, the sea-borne vessel comprises an energy management system configured to control supplying a plurality of electrical consumers on-board the sea-borne vessel with electrical energy from at least one of the following energy bearers: a fuel cell using the hydrogen from the hydrogen storage tank, the at least one battery, the at least one renewable energy generator, an auxiliary engine, in particular a Diesel generator, on-board the sea-borne vessel, and a shore connection.

This provides the advantage of a fair usage of electrical energy on the ship.

In an exemplary implementation form of the sea-borne vessel, the energy management system is configured to control the plurality of electrical consumers to be supplied by all of the energy bearers separately or in combination with each other, either manually or in a computed hierarchy based on an optimization criterion.

This provides the advantage that the electrical energy can be optimally used.

In an exemplary implementation form of the sea-borne vessel, the optimization criterion is based on weather, voyage and energy conditions.

This provides the advantage that the ship-related requirements can be considered in battery management.

In an exemplary implementation form of the sea-borne vessel, the sea-borne vessel comprises a hydrogen production management system configured to control production of hydrogen by the on-board hydrogen generator and to monitor pressure, temperature and efficiency of the hydrogen production.

This provides the advantage that the hydrogen can always be produced in a safe and efficient manner.

In an exemplary implementation form of the sea-borne vessel, the sea-borne vessel comprises: a hydrogen storage management system configured to control storage of the produced hydrogen in the hydrogen storage tank and to monitor pressure, tank level and temperature of the hydrogen in the hydrogen storage tank.

This provides the advantage that the hydrogen can always be stored in a safe and efficient manner.

In an exemplary implementation form of the sea-borne vessel, the sea-borne vessel comprises: a heat conversion engine or apparatus configured to convert heat residue from heat sources on-board the sea-borne vessel into electrical energy for charging the at least one battery and/or providing the on-board hydrogen generator with electrical energy or to be used directly on the AC grid of the ship.

This provides the advantage that the energy efficiency can be significantly increased when using such heat conversion engine or apparatus.

In an exemplary implementation form of the sea-borne vessel, the hydrogen generator is configured to produce the hydrogen from seawater by using a catalyst in an electrolysis process applied to the seawater.

This provides the advantage that the electrolysis can be improved when producing the hydrogen from seawater.

According to a second aspect, the invention relates to a method for production of hydrogen on-board a sea-borne vessel using energy from renewable resources, the method comprising: generating electrical energy on-board the sea-borne vessel based on renewable energy resources; storing the electrical energy generated on-board the sea-borne vessel in at least one battery; producing hydrogen, by an on-board hydrogen electrolysis generator, based on water pumped on-board the sea-borne vessel and electrical energy provided by the at least one energy source 211; storing the produced hydrogen in a hydrogen storage tank on-board the sea-borne vessel; and driving the sea-borne vessel based on hydrogen from the hydrogen storage tank.

Due to on-board production of hydrogen, such a method provides an efficient yield of hydrogen at a high degree of safety. Such a method for on-board production of hydrogen on ships will revolutionize the use of hydrogen as a zero-emission energy solution in the shipping industry. Using this method will delete the need for very expensive and enormous infrastructure build up in form of production facilities far from the end user point. In addition, the need for expensive and secure distribution to end user points will be eradicated. To distribute electricity directly to end-user points on docks where ships with on-board production plants are docked, will be more secure, cost efficient and subject to less energy loss in the value chain.

According to a third aspect, the generated electrical energy can also be used, directly, to produce hydrogen (with no need to store the electrical energy first) or be used, directly, to drive the sea-borne vessel without the need to convert it to hydrogen.

In an alternative embodiment, the hydrogen can also be converted into electricity, using the fuel cell with H2 from the hydrogen storage tank. The system allows the generated electrical energy to be stored on-board the sea-borne vessel in at least one battery and later be used to directly drive the sea-borne vessel.

According to a fourth aspect, the disclosure relates to a computer readable non-transitory medium on which computer instructions are stored which, when executed by a computer, cause the computer to perform the method according to the second and third aspects of the disclosure.

According to a fifth aspect, the disclosure relates to a computer program product comprising program code for performing the method according to the second and third aspects of the disclosure, when executed on a computer or a processor.

Embodiments of the invention can be implemented in hardware and/or software.

The following acronyms are applied in this disclosure:
- H2: hydrogen gas
- EPMS: energy and power management system
- EMS: energy management system
- HMI: human machine interface
- BMS: battery management system
- HPMS: hydrogen production management system
- HSMS: hydrogen storage management system
- AC: alternating current
- DC: direct current
- SOC: state-of-charge

### BRIEF DESCRIPTION OF THE DRAWINGS

Further embodiments of the invention will be described with respect to the following figures, wherein:
Fig. 1 shows schematic diagram illustrating a sea-borne vessel 100 with on-board hydrogen production from renewable resources according to the disclosure;
Fig. 2 shows a block diagram illustrating an exemplary control system 200 of a sea-borne vessel 100 according to the disclosure;
Fig. 3 shows a block diagram illustrating an exemplary control system 300 of a sea-borne vessel 100 according to the disclosure;
Fig. 4 shows a block diagram illustrating an exemplary control system 400 of a sea-borne vessel 100 according to the disclosure; and
Fig. 5 shows a schematic diagram illustrating a method 500 for production of hydrogen on-board a sea-borne vessel according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

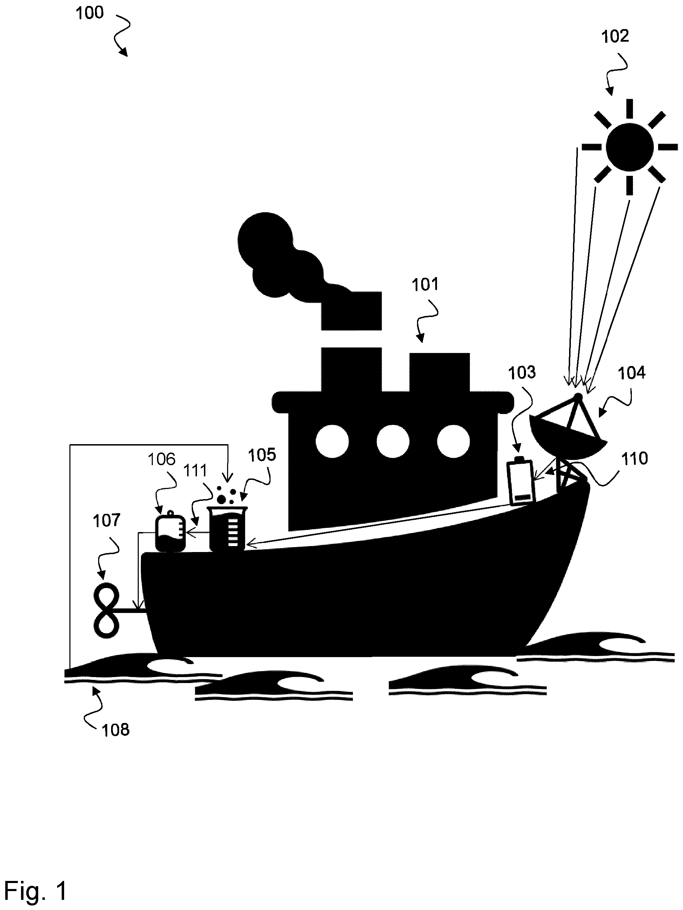

Fig. 1 shows schematic diagram illustrating a sea-borne vessel 100 with on-board hydrogen production from renewable resources according to the disclosure.

The sea-borne vessel 100 produces hydrogen on-board the sea-borne vessel 100 using energy from renewable resources 102 such as solar and/or wind power.

The sea-borne vessel 100 comprises at least one renewable energy generator 104 configured to generate electrical energy 110 on-board the sea-borne vessel 100 based on renewable energy resources 102. In Figure 1 only the sun 102 is depicted and a renewable energy generator 104 exploiting solar energy. However, the vessel 100 may also comprise one or more wind turbines to collect wind energy.

The sea-borne vessel 100 comprises at least one battery 103 configured to store the electrical energy 110 generated by the at least one renewable energy generator 104. The battery 103 is a device consisting of one or more electrochemical cells with external connections for powering electrical devices or devices consuming electrical energy. The battery may be composed of multiple cells, however, the usage has evolved to include devices composed of a single cell.

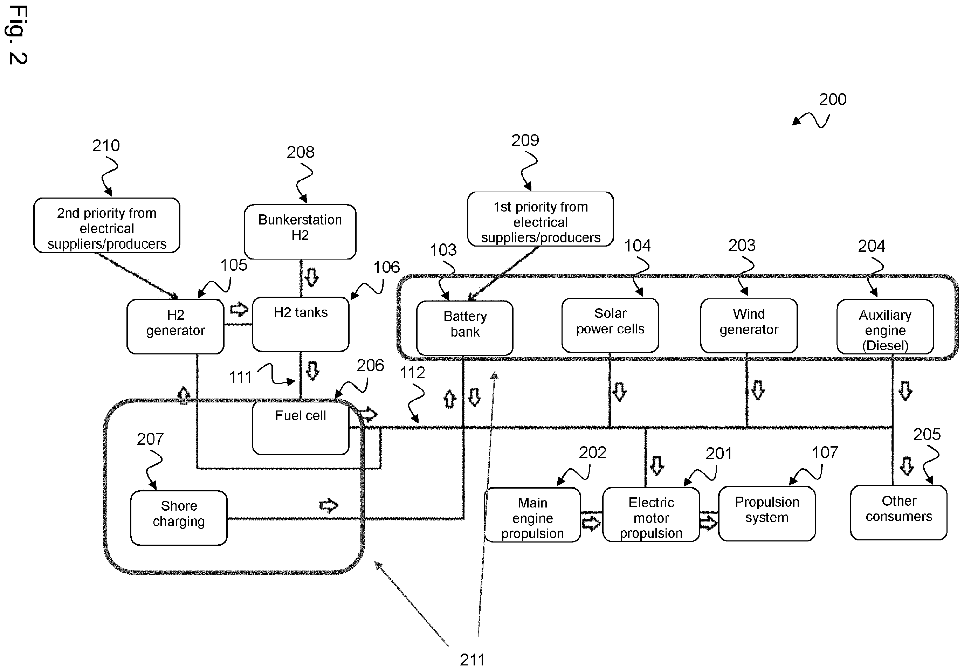

The sea-borne vessel 100 comprises an on-board hydrogen electrolysis generator 105 configured to produce hydrogen 111 based on water 108 pumped on-board the sea-borne vessel 100 and electrical energy 110 provided by the at least one energy source 211. The electric energy source 211 can be any equipment that generates or store electrical energy. The different combinations that make up the Electric energy source 211 in Figure 2 are the following Battery Bank 103, Solar power cells 104, Wind generator 203, Auxiliary engine 204, Shore charging 207 and Fuel cells 206.

Electrolysis of water is the decomposition of water into oxygen and hydrogen gas due to the passage of an electric current. The hydrogen electrolysis generator 105 uses this technique for generating hydrogen gas, a main component of hydrogen fuel, and breathable oxygen gas, or can mix the two into oxyhydrogen, which is also usable as fuel, though more volatile and dangerous. This process is also called water splitting. It ideally requires a potential difference of about 1.23 volts to split water.

The sea-borne vessel 100 comprises a hydrogen storage tank 106 configured to store the produced hydrogen 111 on-board the sea-borne vessel 100.

The sea-borne vessel 100 further comprises a drive propulsion system 107 configured to drive the sea-borne vessel 100 based on hydrogen 111 from the hydrogen storage tank 106.

By moving the hydrogen production on-board the vessel 100, the use of hydrogen 111 can be facilitated as a zero-emission energy solution in the shipping industry. The usage of very expensive and enormous infrastructure build up in form of production facilities far from the end user point can be avoided. In addition, the need for expensive and secure distribution to end user points can be eradicated. The production of hydrogen 111 on-board the vessel 100 by using energy from renewable resources is more secure, cost efficient and subject to less energy loss. By using such a vessel 100, the transition to a low to zero emission shipping industry will go faster and be less expensive for the society.

The sea-borne vessel 100 may comprise a fuel cell, e.g. as shown in Figure 2 below, to convert the hydrogen 111 from the hydrogen storage tank 106 into electrical energy and to provide the electrical energy to the drive propulsion system 107 for driving the sea-borne vessel 100.

The at least one battery 103 can be charged by AC energy generated by the at least one renewable energy generator, e.g. generated by a wind turbine, that is not shown in Figure 1, or provided by a shore connection. The at least one battery 103 can also be charged by DC energy generated by the at least one renewable energy generator 104, e.g. by a solar panel.

Fig. 2 shows a block diagram illustrating an exemplary control system 200 of a sea-borne vessel 100 according to the disclosure.

The control system 200 can be used for an overall control of a sea-borne vessel 100 as exemplarily shown in Figure 1 that produces hydrogen on-board the sea-borne vessel 100 by using energy from renewable resources 102.

The control system 200 can be used to control the different components implemented on-board the ship 100 or to control a connection to shore charging 207.

These components on-board the ship 100 comprise: at least one renewable energy generator, such as solar power cells 104 and a wind generator 203 for generation of electrical energy based on renewable energy resources such as the sun or the wind; at least one battery, e.g. a battery bank 103 configured to store the electrical energy generated by the at least one renewable energy generator; an on-board hydrogen electrolysis generator, i.e. H2 generator 105 configured to produce hydrogen 111 based on water pumped on-board the sea-borne vessel 100 and electrical energy provided by the energy source 211; one or more hydrogen storage tanks, i.e. H2 tanks 106 configured to store the produced hydrogen 111 on-board the sea-borne vessel 100; and a drive propulsion system 107 configured to drive the sea-borne vessel 100 based on hydrogen 111 from the hydrogen storage tank 106.

The propulsion system 107 may be driven by an electric motor propulsion 201 that may be driven by the energy generated by the fuel cell 206 and/or by a main engine propulsion 202.

The fuel cell 206 is configured to convert the hydrogen 111 from the hydrogen storage tank 106 into electrical energy 112 and to provide the electrical energy 112 to the drive propulsion system 107 for driving the sea-borne vessel 100.

The at least one battery 103 can be charged by AC energy generated by the at least one renewable energy generator 203, e.g. the wind generator 203, or may be provided by a shore charging 207. Alternatively, or additionally, the battery bank 103 can be charged by DC energy generated by the at least one renewable energy generator 104, e.g. the solar power cells 104.

The components on-board the ship 100 may include an AC/DC converter, not shown in Figure 2, to convert AC energy generated by the at least one renewable energy generator, e.g. by the wind generator 203, or provided by the shore charging 207 into DC energy for charging the battery bank 103.

The control system 200 may include a battery management system. The battery management system can be used to control charging of the battery bank 103. Such battery management system can be configured to enable the on-board hydrogen generator 105 to produce hydrogen 111 based on a charging level of the battery bank 103. For example, when the charging level is low, e.g. below 30 percent to 50 percent, priority is to recharge the battery bank 103, while when the charging level goes high, e.g. above 80 to 90 percent, priority can be shifted to producing the hydrogen.

The battery management system may disable the on-board hydrogen generator 105 producing hydrogen 111 until the at battery bank 103 is charged to a predefined charging level, e.g. up to a level of at least 80 percent, 85, 90, 95 or even 99 percent.

According to a first priority 209, the battery bank 103 is charged from electrical suppliers or producers. According to a second priority 210, the H2 generator 105 is charged from electrical suppliers or producers.

The battery management system may be configured to balance energy in the battery bank 103 and to monitor temperature, current, voltage and charging level of the battery bank 103.

The control system 200 may include an energy management system. The energy management system may be configured to control supplying a plurality of electrical consumers such as electric motor propulsion 201, propulsion system 107 and other consumers 205 on-board the sea-borne vessel 100 with electrical energy. This electrical energy may originate from the fuel cell 206 by using the hydrogen 111 from the H2 tanks 106, the battery bank 103, the solar power cells 104, the wind generator 203, an auxiliary engine 204, e.g. a Diesel generator, and a shore charging 207.

The energy management system may be configured to control the plurality of electrical consumers 107, 201, 205 to be supplied by all of the energy bearers separately or in combination with each other, either manually or in a computed hierarchy based on an optimization criterion. This optimization criterion may be based on weather, voyage and energy conditions, for example.

The control system 200 may include a hydrogen production management system to control production of hydrogen 111 by the H2 generator 105 and to monitor pressure, temperature and efficiency of the hydrogen production.

The control system 200 may include a hydrogen storage management system to control storage of the produced hydrogen 111 in the H2 tanks 106 and to monitor pressure, tank level and temperature of the hydrogen 111 in the H2 tanks 106.

The hydrogen generator 105 may produce the hydrogen 111 from seawater by using a catalyst in an electrolysis process applied to the seawater. The hydrogen storage management system may increase efficiency of electrolysis through the addition of an electrolyte such as a salt, an acid or a base and the use of an electrocatalyst, i.e. a catalyst that participates in electrochemical reactions.

Catalyst materials modify and increase the rate of chemical reactions without being consumed in the process. Electrocatalysts are a specific form of catalysts that function at electrode surfaces or may be the electrode surface itself. An electrocatalyst can be heterogeneous such as a platinum surface or nanoparticles, or homogeneous like a coordination complex or enzyme. The electrocatalyst assists in transferring electrons between the electrode and reactants, and/or facilitates an intermediate chemical transformation described by an overall half-reaction. The hydrogen storage management system may control usage of an electrocatalyst to facilitate production of hydrogen.

The control system 200 may control a heat conversion engine configured to convert heat residue from heat sources on-board the sea-borne vessel 100 into electrical energy for charging the battery bank 103 and/or providing the on-board hydrogen generator 105 with electrical energy.

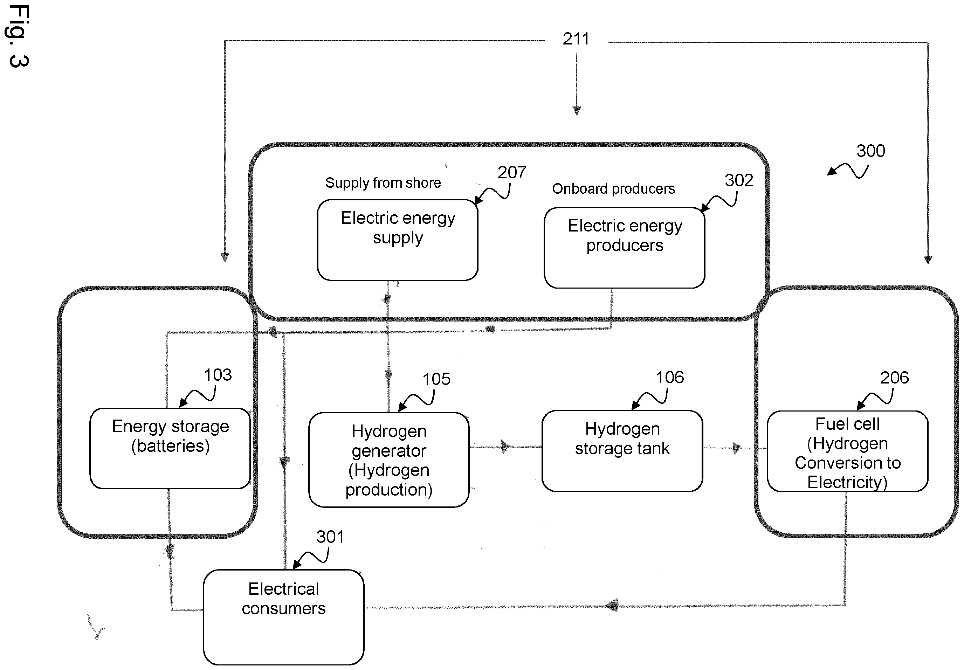

Fig. 3 shows a block diagram illustrating an exemplary control system 300 of a sea-borne vessel 100 according to the disclosure.

Such a sea-borne vessel produces hydrogen on-board the sea-borne vessel 100 by using energy from renewable resources, e.g. solar and/or wind energy. The sea-borne vessel 100 comprises electric energy producers 302, e.g. one or more renewable energy generators to generate electrical energy on-board the sea-borne vessel 100 based on renewable energy resources. The vessel 100 comprises an energy storage 103, e.g. batteries to store the electrical energy generated by the on-board electric energy producers 302 or from electric energy supply 207 from shore.

The vessel 100 comprises an on-board hydrogen generator 105 for the hydrogen production that may be produced based on water 108 pumped on-board the sea-borne vessel 100 and electrical energy provided by an energy source 211. The electric energy source 211 can be any equipment that generates or store electrical energy. The different combinations that make up the Electric energy source 211 in Figure 3 are the following Electric energy supply 207 which is supply from shore, Electric energy producers 302 which are the on-board producers, Energy storage or Batteries 103 and Fuel Cell 206. The vessel 100 comprises a hydrogen storage tank 106 to store the produced hydrogen on-board the sea-borne vessel 100.

The vessel further comprises electrical consumers 301, e.g. the propulsion system 107 described above with respect to Figures 1 and 2, for consuming the electrical energy provided by the electric energy producers 302, the electric energy supply 207 and energy provided by a fuel cell 206. The propulsion system 107 is configured to drive the sea-borne vessel 100 based on hydrogen from the hydrogen storage tank 106.

The control system 300 controls all the components shown in Figure 3 in order to drive the vessel 100.

The control system 300 facilitates to drive the ship 100 by zero-emission energy and to avoid using expensive and enormous infrastructure build ups in form of production facilities. The control system 300 enables production of hydrogen 111 on-board the vessel 100 by using energy from renewable resources and hence makes shipping more secure, cost efficient and subject to less energy loss.

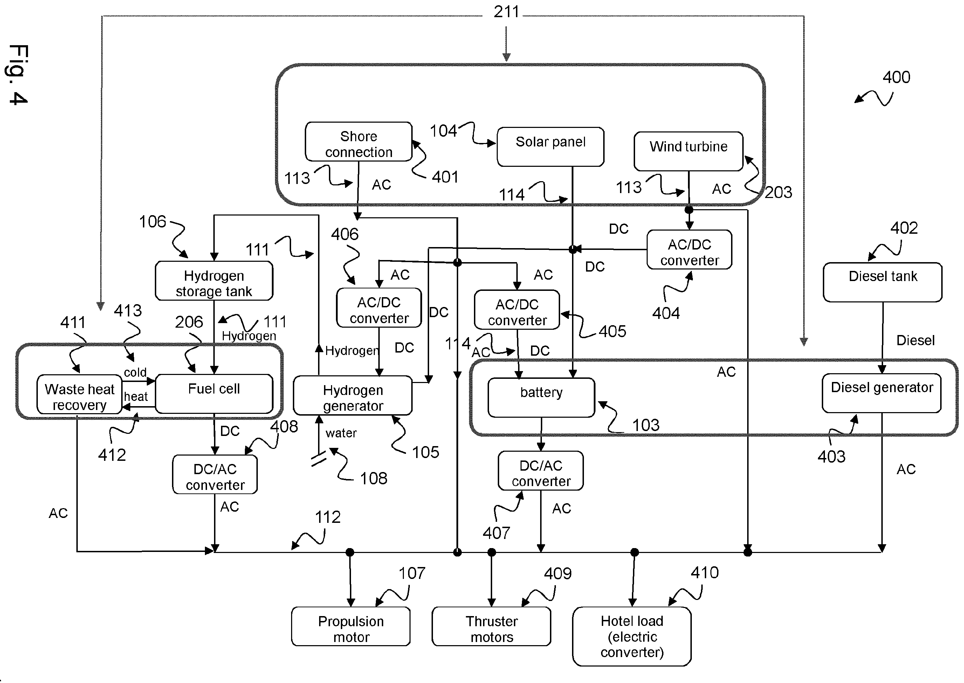

Fig. 4 shows a block diagram illustrating an exemplary control system 400 of a sea-borne vessel 100 according to the disclosure. The control system 400 controls the different components of a sea-borne vessel 100 for producing hydrogen on-board the sea-borne vessel 100 using energy from renewable resources 102.

These components include: at least one renewable energy generator 104, 203 configured to generate electrical energy on-board the sea-borne vessel 100 based on renewable energy resources; at least one battery 103 configured to store the electrical energy generated by the at least one renewable energy generator 104, 203; an on-board hydrogen electrolysis generator 105 configured to produce hydrogen 111 based on water 108 pumped on-board the sea-borne vessel 100 and electrical energy provided by the at least one energy source 211 ; a hydrogen storage tank 106 configured to store the produced hydrogen 111 on-board the sea-borne vessel 100; and a drive propulsion system 107 configured to drive the sea-borne vessel 100 based on hydrogen from the hydrogen storage tank 106.

The sea-borne vessel 100 further comprises fuel cell 206 configured to convert the hydrogen 111 from the hydrogen storage tank 106 into electrical energy 112 and to provide the electrical energy 112 to the drive propulsion system 107 for driving the sea-borne vessel 100.

The electric energy source 211 can be any equipment that generates or store electrical energy. The different combinations that make up the Electric energy source 211 in Figure 4 are shore connection 401, Solar panel 104, Wind turbine 203, Waste heat recovery 411, Fuel cell 206, Batteries or Energy storage 103 and Diesel generator 403.

The at least one battery 103 can be charged by AC energy 113 generated by the at least one renewable energy generator, e.g. the wind turbine 203, or provided by a shore connection 401. The at least one battery 103 can be charged by DC energy 114 generated by the at least one renewable energy generator, e.g. a solar panel 104.

The sea-borne vessel 100 comprises: an AC/DC converter 404, 405 configured to convert AC energy 113 generated by the at least one renewable energy generator 203 or provided by the shore connection 401 into DC energy 114 for charging the at least one battery 103.

The control system 400 shown in Figure 4 includes a battery management system configured to control charging of the at least one battery 103. The battery management system may be configured to enable the on-board hydrogen generator 105 to produce hydrogen 111 based on a charging level of the at least one battery 103.

The battery management system may be configured to disable the on-board hydrogen generator 105 producing hydrogen 111 until the at least one battery 103 is charged to a predefined charging level.

The battery management system may be configured to balance energy in the at least one battery 103 and to monitor temperature, current, voltage and charging level of the at least one battery 103.

The control system 400 shown in Figure 4 includes an energy management system configured to control supplying a plurality of electrical consumers, e.g. propulsion motor 107, thruster motors 409, hotel load 410 on-board the sea-borne vessel 100 with electrical energy from at least one of the following energy bearers: a fuel cell 206 using the hydrogen 111 from the hydrogen storage tank 106, the at least one battery 103, the at least one renewable energy generator 104, 203, an auxiliary engine 403, e.g. a Diesel generator, on-board the sea-borne vessel 100, and a shore connection 401. The ship 100 may accommodate a hotel providing a plurality of electrical consumers with electrical energy 111.

The energy management system may be configured to control the plurality of electrical consumers 107, 409, 410 to be supplied by all of the energy bearers separately or in combination with each other, either manually or in a computed hierarchy based on an optimization criterion. Such a hierarchy may be that propulsion motor 107 is supplied first, then thruster motor 409 and finally the hotel load 410. The optimization criterion may be to share the power budget between the propulsion motor 107, the thruster motor 409 and the hotel load 410 in a weighted manner. For example, a first percentage of the power budget is reserved for the propulsion motor 107, a second percentage of the power budget is reserved for the thruster motors 409 and a third percentage of the power budget is reserved for the hotel load. For example, the first percentage may be about 60 percent, the second percentage may be about 30 percent and the third percentage may be about 10 percent. Any other weighting is possible as well.

The optimization criterion may further be based on weather, voyage and energy conditions. For example, at bad weather and/or energy conditions, the first percentage and the second percentage can be increased while the third percentage can be decreased. When the voyage is near to its destination, the first percentage and the second percentage can be decreased again while the third percentage can be increased.

The control system 400 shown in Figure 4 includes a hydrogen production management system configured to control production of hydrogen 111 by the on-board hydrogen generator 105 and to monitor pressure, temperature and efficiency of the hydrogen production.

The control system 400 shown in Figure 4 includes a hydrogen storage management system configured to control storage of the produced hydrogen 111 in the hydrogen storage tank 106 and to monitor pressure, tank level and temperature of the hydrogen 111 in the hydrogen storage tank 106.
The control system 400 shown in Figure 4 may control a heat conversion engine 411 on-board the vessel 100 that may be configured to convert heat residue from heat sources 412 on-board the sea-borne vessel 100 into electrical energy for charging the at least one battery 103 and/or providing the on-board hydrogen generator 105 with electrical energy.

The hydrogen generator 105 may be configured to produce the hydrogen 111 from seawater 108 by using a catalyst in an electrolysis process applied to the seawater 108, e.g. as described above with respect to Figures 2 and 3.

In the following, further embodiments of a sea-borne vessel 100 according to the disclosure are described.

According to an embodiment, the sea-borne vessel 100 comprises an apparatus for the production of hydrogen 111 on-board using energy from renewable resources, with a system comprising of: a hydrogen generator 105 for producing hydrogen 111 on-board using different methods and renewable sources; an electrical system for storing the electricity produced into the storage batteries 103 using the an energy storage control system; a propulsion system 107, 409 where it uses the stored hydrogen 111 for the ship's propulsion; and a generator for back-up energy production.

The renewable sources may include smart solar cells using sunlight to directly produce Hydrogen using a catalyst. Such smart solar cells may include a molecule that can absorb sunlight efficiently and can also act as a catalyst to transform solar energy into hydrogen. Such a molecule collects energy from the entire visible spectrum, and can harness more than 50% more solar energy than current solar cells can do.

Such smart solar cell can be constructed from just one molecule, i.e. a form of the element rhodium, which means less energy is lost. By using this single molecule solar cell, energy can be collected from infrared to ultraviolet, i.e. over the entire visible spectrum. In particular, this Rhodium-based solar cell is nearly 25 times more efficient with low-energy near-infrared light than single-molecule systems operative with ultraviolet photons. The smart solar cell can be implemented by using LEDs to shine light onto acid solutions containing the active molecule. By this process, hydrogen can be efficiently produced on-board the vessel. When using an active molecule that is difficult to oxidize such as the mentioned Rhodium-based molecule, energy production efficiency can be increased at high safety.

According to an embodiment, the system 400 for the production of hydrogen 111 on-board the vessel is using a hydrogen generator 105 for producing hydrogen 111 on-board using renewable energy sources, including solar, wind, water, heat and shore power.

According to an embodiment, the hydrogen generator 105 is using solar power for hydrogen production through heat conversion to electricity using a heat-conversion engine, for example a Stirling motor. All surfaces are suitable for high efficiency solar cells or thermal solar panels and can be utilised to generate electricity. This can include, but not limited to the windows or portholes superstructure of the ship where it is more likely to capture as much as possible from this source. This energy will charge the batteries initially until target 'State of Charge' ('SOC') is reached, then the additional electricity will be used to produce Hydrogen gas.

According to an embodiment, heat residue 412 from heat-sources on-board can be used for electric production through the heat-conversion engine 411, or any other type heat conversion system, for example a Stirling motor. This energy will charge the batteries 103 initially until target 'State of Charge' ('SOC') is reached, then the additional electricity will be used to produce Hydrogen gas 111.

According to an embodiment, the hydrogen generator 105 is using wind power for hydrogen production, using the vessel's equipped masts with wind turbines placed to capture as much wind as possible. This energy will charge the batteries 103 initially until target 'State of Charge' ('SOC') is reached, then the additional electricity will be used to produce Hydrogen gas 111.

According to an embodiment, the hydrogen generator 105 is using shore power which are power connections 401 from the pier of a port that allow charging directly to battery banks 103 on-board as the primary storage for energy on-board. When batteries 103 are charged the system will continue to take on-board shore power to produce hydrogen 111 to be stored in tanks 106 either under high pressure or cooled down to liquid Hydrogen. This enables storing and utilizing renewable energy for later use.

According to an embodiment, the hydrogen generator 105 uses electrolysis for energy producing using filtered seawater 108 containing its natural sodium chloride content, as by using a catalyst in an electrolysis process will make the hydrogen production from saltwater 108 more efficient than production from purified water. The hydrogen 111 will be stored in tanks 106 either under high pressure or cooled down to liquid Hydrogen. This enables storing and utilizing renewable energy for later use.

According to an embodiment, the system 400 has an emergency solution with a small generator, for example a conventional auxiliary engine or an emergency generator running on fossil fuel, e.g. a Diesel generator 403, that is installed for back-up energy production, such as for "bring me home" scenarios.

According to an embodiment, the Energy and Power Management System (EPMS) is able to discriminate on how to use the renewable energy, with the batteries 103 being always prioritized, which allows the overall control system 400 of all energy storage, converter, producers and consumers and how the different subsystems interact, and is also used as the Human Machine Interface (HMI). Each of these subsystems can have their own control system built in and programmed from the manufacturer for safe use, efficiency, handling amongst others.

According to an embodiment, the Energy and Power Management System (EPMS) and the sub system Energy Storage Control System (ESCS) is configured to monitor and regulate that the batteries 103 are prioritized, to monitor and regulate that the hydrogen generator 105 starts generating hydrogen 111 after the batteries 103 reached target State of Charge (SOC).

According to an embodiment, following the batteries 103 maximum charging, the system 400 will then continue to use the renewable energy to produce hydrogen 111 to on-board tanks 106 for storage and for later use using the electrical system.

According to an embodiment, energy is used from the batteries 103 and the load/discharge range on the batteries 103 are optimally used to the recommended low rate, where the renewable energy is again charging the batteries 103 and stops producing hydrogen 111.

According to an embodiment, an electric diesel generator 403 can be integrated in the system 400 in order to secure safe navigation and operation of the ship 100. An electric diesel generator specifies a conventional generator that can power the whole ship 100 and also provides enough power to make maximum speed, whereas a backup generator is a smaller generator which only lets the ship 100 travel at a reduced speed and maybe only provides power to a prioritized load.

According to an embodiment, the propulsion system includes several different types of energy bearers, for example hydrogen, wind, solar, etc. The system 400 allows the propulsion to be driven by all types of energy bearers available on-board, separately or in combination with each other pending on either manually selected on-board or in a computed hierarchy where the system 400 itself seeks to find the best economic way to operate through the Energy and Power Management System (EPMS). This can include weather routing, efficiency handling of different subsystems such as keeping fuel cell 206 in the favorable operating range as well as diesel engines 403 or using battery system for peak shaving to optimize efficiency of other subsystems. This may be incorporated with different voyage or weather or energy optimization systems.

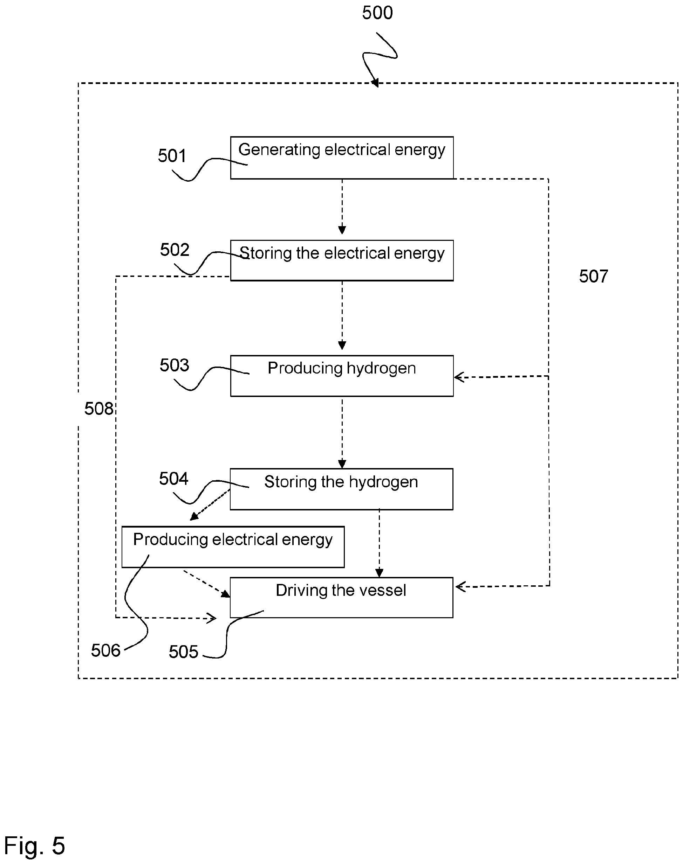

Fig. 5 shows a schematic diagram illustrating a method 500 for production of hydrogen on-board a sea-borne vessel using energy from renewable resources according to the disclosure, or alternatively converting electricity into hydrogen on-board a sea-borne vessel.

The method 500 comprises generating 501 electrical energy 110 on-board the sea-borne vessel 100 based on renewable energy resources 102, e.g. as described above with respect to Figures 1 to 4.

The method 500 comprises storing 502 the electrical energy 110 generated on-board the sea-borne vessel 100 in at least one battery 103, e.g. as described above with respect to Figures 1 to 4.

The method 500 comprises producing 503 hydrogen 111, by an on-board hydrogen electrolysis generator 105, based on water 108 pumped on-board the sea-borne vessel 100 and electrical energy 110 provided by the at least one energy source 211 , e.g. as described above with respect to Figures 1 to 4.

The method 500 comprises storing 504 the produced hydrogen 111 in a hydrogen storage tank 106 on-board the sea-borne vessel 100, e.g. as described above with respect to Figures 1 to 4.

The method 500 comprises driving 505 the sea-borne vessel 100 based on hydrogen 111 from the hydrogen storage tank 106, e.g. as described above with respect to Figures 1 to 4.
The method 500, alternatively, comprises of converting hydrogen into electricity 506 using the fuel cell 206, from the hydrogen storage tank 106, i.e. as described above with respect to Figures 1 to 4.

The method 500 comprises of using the electrical energy 507, which can directly be used for producing hydrogen 503, or, alternatively, can also be used to directly drive the vessel 505, as indicated by the dotted line 507. The user also has the option to store the energy in at least one battery 103, as explained above in Figures 1 to 4.

The method 500 may also be using the electrical energy stored in 502 to drive the vessel 505 directly, as indicated by the dotted line 508.

The method 500 may be implemented on a computer or on any kind of processor where the different techniques indicated by the dotted lines (507 or 508, or between 501 and 505 or between 501 and 506) can be performed.

Another aspect of the disclosure relates to a computer readable non-transitory medium on which computer instructions are stored which, when executed by a computer, cause the computer to perform the method 500.

Another aspect of the invention is related to a computer program product comprising program code for performing the method 500 or the functionalities described above, when executed on a computer or a processor. The method 500 may be implemented as program code that may be stored on a non-transitory computer medium. The computer program product may implement the techniques described above with respect to Figures 1 to 4.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A sea-borne vessel (100) for producing hydrogen on-board the sea-borne vessel (100) using energy from renewable resources (102), the sea-borne vessel (100) comprising:
at least one renewable energy generator (104) configured to generate electrical energy (110) on-board the sea-borne vessel (100) based on renewable energy resources (102);
at least one energy source (211) which can be any equipment that generates or store electrical energy;
at least one battery (103) configured to store the electrical energy (110) generated by the at least one renewable energy generator (104, 203) from renewable energy resources (102), included in the energy sources (211);
an on-board hydrogen electrolysis generator (105) configured to produce hydrogen (111) based on water (108) pumped on-board the sea-borne vessel (100) and electrical energy (110) provided by the at least one battery (103);
a hydrogen storage tank (106) configured to store the produced hydrogen (111) on-board the sea-borne vessel (100); and
a drive propulsion system (107) configured to drive the sea-borne vessel (100) based on hydrogen (111) from the hydrogen storage tank (106).

2. The sea-borne vessel (100) of one of the preceding claims, comprising:
a fuel cell (206) configured to convert the hydrogen (111) from the hydrogen storage tank (106) into electrical energy (112) and to provide the electrical energy (112) to the drive propulsion system (107) for driving the sea-borne vessel (100).

3. The sea-borne vessel (100) of claim 1 or 2,
wherein the at least one battery (103) can be charged by AC energy (113) generated by the at least one energy source (211) including the renewable energy generator (203), in particular a wind turbine, or provided by a shore connection (401), and
wherein the at least one battery (103) can be charged by DC energy (114) generated by the at least one renewable energy generator (104), in particular a solar panel.

4. The sea-borne vessel (100) of claim 3, comprising:
an AC/DC converter (404, 405) configured to convert AC energy (113) generated by the at least one renewable energy generator (203) or provided by the shore connection (401) into DC energy (114) for charging the at least one battery (103).

5. The sea-borne vessel (100) of one of the preceding claims, comprising:
a battery management system configured to control charging of the at least one battery (103),
wherein the battery management system is configured to enable the on-board hydrogen generator (105) to produce hydrogen (111) based on a charging level of the at least one battery (103).

6. The sea-borne vessel (100) of claim 5,
wherein the battery management system is configured to disable the on-board hydrogen generator (105) producing hydrogen (111) until the at least one battery (103) is charged to a predefined charging level.

7. The sea-borne vessel (100) of claim 5 or 6,
wherein the battery management system is configured to balance energy in the at least one battery (103) and to monitor temperature, current, voltage and charging level of the at least one battery (103).

8. The sea-borne vessel (100) of one of the preceding claims, comprising:
an energy management system configured to control supplying a plurality of electrical consumers (107, 409, 410, 301) on-board the sea-borne vessel (100) with electrical energy from at least one of the following energy bearers:
a fuel cell (206) using the hydrogen (111) from the hydrogen storage tank (106),
the at least one battery (103),
the at least one renewable energy generator (104, 203),
an auxiliary engine (403), in particular a Diesel generator, on-board the sea-borne vessel (100), and
a shore connection (401).

9. The sea-borne vessel (100) of claim 8,
wherein the energy management system is configured to control the plurality of electrical consumers (107, 409, 410, 301) to be supplied by all of the energy bearers separately or in combination with each other, either manually or in a computed hierarchy based on an optimization criterion.

10. The sea-borne vessel (100) of claim 9,
wherein the optimization criterion is based on weather, voyage and energy conditions.

11. The sea-borne vessel (100) of one of the preceding claims, comprising:
a hydrogen production management system configured to control production of hydrogen (111) by the on-board hydrogen generator (105) and to monitor pressure, temperature and efficiency of the hydrogen production.

12. The sea-borne vessel (100) of one of the preceding claims, comprising:
a hydrogen storage management system configured to control storage of the produced hydrogen (111) in the hydrogen storage tank (106) and to monitor pressure, tank level and temperature of the hydrogen (111) in the hydrogen storage tank (106).

13. The sea-borne vessel (100) of one of the preceding claims, comprising:
a heat conversion engine (411) configured to convert heat residue from heat sources (412) on-board the sea-borne vessel (100) into electrical energy for charging the at least one battery (103) and/or providing the on-board hydrogen generator (105) with electrical energy and/or providing other electrical consumers on-board with electrical energy.

14. The sea-borne vessel (100) of one of the preceding claims,
wherein the hydrogen generator (105) is configured to produce the hydrogen (111) from seawater (108) by using a catalyst in an electrolysis process applied to the seawater (108).

15. A method (500) for production of hydrogen on-board a sea-borne vessel (100) using energy (110) from renewable resources, the method (500) comprising:
generating (501) electrical energy (110) on-board the sea-borne vessel (100) based on renewable energy resources (102);
storing (502) the electrical energy (110) generated on-board the sea-borne vessel (100) in at least one battery (103);
producing (503) hydrogen (111), by an on-board hydrogen electrolysis generator (105), based on water (108) pumped on-board the sea-borne vessel (100) and electrical energy (110) provided by the at least energy source (211);
storing (504) the produced hydrogen (111) in a hydrogen storage tank (106) on-board the sea-borne vessel (100); and
driving (505) the sea-borne vessel (100) based on hydrogen (111) from the hydrogen storage tank (106).

16. A method for converting hydrogen into electricity (506) using the fuel cell (206) from the hydrogen storage tank (106) the method (500) comprising:
using the generated electrical energy (501) directly to produce hydrogen (503, 507); or
wherein the electrical energy (501) is used to directly drive the sea-borne vessel (505, 507); or
wherein the generated electrical energy (501) is stored (502) on-board the sea-borne vessel (501) in at least one battery (103) and later is used to directly drive the sea-borne vessel (505, 508).
